(19)

Europäisches Patentamt
European Patent Office
Office européen des brevets

(11)   **EP 4 450 534 A1**

(12)

# EUROPEAN PATENT APPLICATION
published in accordance with Art. 153(4) EPC

(43) Date of publication:
**23.10.2024  Bulletin 2024/43**

(21) Application number: **22907976.9**

(22) Date of filing: **15.12.2022**

(51) International Patent Classification (IPC):
**C08G 63/672** (2006.01)      **C08G 63/199** (2006.01)
**C08G 63/78** (2006.01)      **C08K 5/00** (2006.01)

(52) Cooperative Patent Classification (CPC):
**C08G 63/199; C08G 63/672; C08G 63/78;
C08K 5/00**

(86) International application number:
**PCT/KR2022/020503**

(87) International publication number:
**WO 2023/113509 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **15.12.2021  KR 20210179931**

(71) Applicant: **SK Chemicals Co., Ltd.**
**Seongnam-si, Gyeonggi-do 13494 (KR)**

(72) Inventors:
• **LEE, Jin-Kyung**
**Seongnam-si, Gyeonggi-do 13494 (KR)**

• **KANG, Byoung-Gook**
**Seongnam-si, Gyeonggi-do 13494 (KR)**
• **MOON, Jung-Me**
**Seongnam-si, Gyeonggi-do 13494 (KR)**
• **SIM, Jinsook**
**Seongnam-si, Gyeonggi-do 13494 (KR)**
• **OH, Hyun-Woo**
**Seongnam-si, Gyeonggi-do 13494 (KR)**
• **LEE, Yoo Jin**
**Seongnam-si, Gyeonggi-do 13494 (KR)**

(74) Representative: **Dehns**
**St. Bride's House
10 Salisbury Square
London EC4Y 8JD (GB)**

(54)   **COPOLYMERIZED POLYESTER RESIN AND PREPARATION METHOD THEREOF**

(57)   The present invention relates to a copolymerized polyester resin and a preparation method thereof. Particularly, the copolymerized polyester resin according to one embodiment of the present invention comprises: a repeating unit derived from a diol component; and a dicarboxylic acid or a repeating unit derived from a derivative component of a dicarboxylic acid. By controlling the contents of a first diol to a third diol included in the diol component, the copolymerized polyester resin does not have degraded transparency and mechanical properties and exhibits excellent heat resistance and hydrolysis resistance, and thus exhibits low haze degradation even in high-temperature and humid conditions. Therefore, the copolymerized polyester resin may be applied to various fields requiring high heat resistance, hydrolysis resistance, and mechanical properties, such as a packaging material such as food containers, a vehicle interior material and the like, to exhibit excellent properties.

EP 4 450 534 A1

## Description

### Technical Field

The present invention relates to a copolymerized polyester resin and to a process for preparing the same.

### Background Art

Polyester resins are widely used as materials for fibers, films, sheets, packaging materials such as food containers, and automobile interior parts by virtue of their excellent mechanical properties and transparency. In particular, since materials such as packaging materials in direct contact with food or automobile interior parts exposed to high temperatures require high thermal resistance and hydrolysis resistance, research to enhance the same is ongoing.

In order to enhance the thermal resistance and hydrolysis resistance of a polyester resin, it is blended with other resins, or various additives are used. However, there is a limit to enhancing the thermal resistance and hydrolysis resistance. Even if thermal resistance or hydrolysis resistance can be enhanced, there is a problem in that such properties as transparency or mechanical properties are deteriorated. Accordingly, there is a need for research on polyester resins capable of enhancing thermal resistance and hydrolysis resistance without deteriorating transparency and mechanical properties.

As an example, Korean Laid-open Patent Publication No. 2019-0064304 discloses a polyester resin having enhanced thermal resistance by copolymerizing a dicarboxylic acid compound including isophthalic acid and a diol compound including a cyclohexyl-based bisphenol compound. When the cyclohexyl-based bisphenol compound is employed, however, crystallinity is lowered, which deteriorates the viscosity characteristics and mechanical properties such as impact strength of the polyester resin.

[Prior Art Document]

[Patent Document]

(Patent Document 1) Korean Laid-open Patent Publication No. 2019-0064304

Disclosure of Invention

Technical Problem

Accordingly, the present invention aims to provide a copolymerized polyester resin capable of enhancing thermal resistance and hydrolysis resistance without deteriorating transparency and mechanical properties and a process for preparing the same.

### Solution to Problem

The copolymerized polyester resin according to an embodiment of the present invention comprises a repeat unit derived from a diol component and a repeat unit derived from a dicarboxylic acid or its derivative component, wherein the diol component comprises (1) 9% by mole to 24% by mole of a first diol comprising isosorbide (ISB) or a derivative thereof; (2) 65% by mole to 81% by mole of a second diol comprising cyclohexanedimethanol (CHDM) or a derivative thereof; and (3) 8% by mole to 20% by mole of a third diol different from the first diol and the second diol, and a specimen having a thickness of 6 mm prepared from the copolymerized polyester resin has a haze of 30% or less when immersed in water at 85°C for 7 days.

The process for preparing a copolymerized polyester resin according to another embodiment of the present invention comprises (a) preparing a composition comprising a diol component and a dicarboxylic acid or its derivative component; (b) subjecting the composition to an esterification reaction; and (c) subjecting the product of the esterification reaction to a polycondensation reaction, wherein the molar ratio (G/A) of the diol component to the dicarboxylic acid or its derivative component introduced in step (a) is 1.10 to 3.00.

### Advantageous Effects of Invention

The copolymerized polyester resin according to an embodiment of the present invention comprises a repeat unit derived from a diol component and a repeat unit derived from a dicarboxylic acid or its derivative component, wherein the diol component comprises a first diol comprising isosorbide (ISB) or a derivative thereof, a second diol comprising cyclohexanedimethanol (CHDM) or a derivative thereof, and a third diol different from the first diol and the second diol, and the contents of the first to third diols are controlled, whereby it is possible to enhance thermal resistance and hydrolysis resistance without deteriorating transparency and mechanical properties.

In particular, since the copolymerized polyester resin has a very low degree of decrease in haze even under moisture conditions at high temperatures as compared with the prior art, it can be used in various fields that require high thermal resistance, hydrolysis resistance, and mechanical properties, such as packaging materials such as food containers and automobile interior parts, thereby exhibiting excellent properties.

**Mode for the Invention**

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another.

**Copolymerized polyester resin**

The copolymerized polyester resin according to an embodiment of the present invention comprises a repeat unit derived from a diol component and a repeat unit derived from a dicarboxylic acid or its derivative component, wherein the diol component comprises (1) 9% by mole to 24% by mole of a first diol comprising isosorbide (ISB) or a derivative thereof; (2) 65% by mole to 81% by mole of a second diol comprising cyclohexanedimethanol (CHDM) or a derivative thereof; and (3) 8% by mole to 20% by mole of a third diol different from the first diol and the second diol, and a specimen having a thickness of 6 mm prepared from the copolymerized polyester resin has a haze of 30% or less when immersed in water at 85°C for 7 days.

The copolymerized polyester resin is a resin in which a diol component and a dicarboxylic acid or its derivative component are copolymerized, and it comprises a repeat unit derived from a diol component and a repeat unit derived from a dicarboxylic acid or a derivative component thereof.

Specifically, the diol component comprises a first diol comprising isosorbide (ISB) or a derivative thereof in an amount of 9% by mole to 24% by mole based on the total number of moles of the diol component. Specifically, the copolymerized polyester resin comprises 9% by mole to 24% by mole of a residue derived from the first diol relative to the entire diol-derived residues of the copolymerized polyester resin.

For example, the copolymerized polyester resin may comprise the first diol in an amount of 9% by mole to 20% by mole, 10% by mole to 24% by mole, 10% by mole to 22% by mole, 9% by mole to 22% by mole, 10% by mole to 20% by mole, or 10% by mole to 16% by mole, based on the total number of moles of the diol component.

As the content of the first diol satisfies the above range, it is possible to enhance hydrolysis resistance without deteriorating thermal resistance. Specifically, if the content of the first diol is less than 9% by mole, the glass transition temperature of the copolymerized polyester resin may be lowered, which deteriorates thermal resistance. If the content of the first diol exceeds 24% by mole, the hydrolysis resistance of the copolymerized polyester resin may be significantly deteriorated, which increases the change in glass transition temperature under moisture conditions at high temperatures, resulting in deteriorated quality.

In addition, the diol component comprises a second diol comprising cyclohexanedimethanol (CHDM) or a derivative thereof in an amount of 65% by mole to 81% by mole based on the total number of moles of the diol component. Specifically, the copolymerized polyester resin comprises 65% by mole to 81% by mole of a residue derived from the second diol relative to the entire diol-derived residues of the copolymerized polyester resin.

For example, the copolymerized polyester resin may comprise the second diol in an amount of 65% by mole to 80% by mole, 65% by mole to 78% by mole, 68% by mole to 81% by mole, 70% by mole to 78% by mole, 70% by mole to 76% by mole, or 70% by mole to 75% by mole, based on the total number of moles of the diol component.

As the content of the second diol satisfies the above range, it is possible to enhance hydrolysis resistance and mechanical properties such as impact strength without deteriorating thermal resistance. Specifically, if the content of the second diol is less than 65% by mole, the mechanical properties such as impact strength of the copolymerized polyester resin may be deteriorated, which deteriorates the durability and lifespan characteristics of a product prepared from the copolymerized polyester resin. If the content of the second diol exceeds 81% by mole, the crystal characteristics may increase due to the reactivity with the first diol, which significantly deteriorates transparency and hydrolysis resistance.

The diol component comprises a third diol different from the first diol and the second diol.

The third diol may be at least one selected from the group consisting of ethylene glycol, diethylene glycol, triethylene glycol, 1,2-propanediol, 1,3-propanediol, 1,4-propanediol, 1,5-pentanediol, 1,6-hexanediol, 1,8-octanediol, 2-methyl-1,3-propanediol, 2,2,4-trimethyl-1,3-pentanediol, 2-ethyl-2-butyl-1,3-propanediol, neopentyl glycol, and derivatives thereof. Ethylene glycol may be preferable in that it can enhance thermal resistance and hydrolysis resistance without deteriorating transparency and mechanical properties, but it is not limited thereto.

The copolymerized polyester resin comprises the third diol in an amount of 8% by mole to 20% by mole based on the total number of moles of the diol component. Specifically, the copolymerized polyester resin comprises 8% by mole to 20% by mole of a residue derived from the third diol relative to the entire diol-derived residues of the copolymerized polyester resin.

For example, the copolymerized polyester resin may comprise the third diol in an amount of 8% by mole to 18% by mole, 9% by mole to 20% by mole, 10% by mole to 20% by mole, 10% by mole to 15% by mole, or 8% by mole to 15% by mole, based on the total number of moles of the diol component.

According to an embodiment of the present invention, it is important to adjust the contents of the first to third diols in the copolymerized polyester resin.

Specifically, in order to achieve the desired physical properties in the present invention, more specifically to enhance thermal resistance and hydrolysis resistance without deteriorating transparency and mechanical properties, it is very important to adjust the contents of the first to third diols in the copolymerized polyester resin. Therefore, according to an embodiment of the present invention, as the contents of the first to third diols satisfy the above respective ranges, it is possible to enhance thermal resistance and hydrolysis resistance, along with transparency and mechanical properties.

In particular, isosorbide has been conventionally used in that it can enhance thermal resistance by increasing the glass transition temperature. When isosorbide is used, the thermal resistance can be enhanced, whereas there is a problem of deterioration in quality, such as a decrease in transparency, color characteristics, or mechanical properties, or a decrease in hydrolysis resistance, which increases a change in glass transition temperature under moisture conditions at high temperatures. In addition, isosorbide has low reactivity, which makes it difficult to form a high-viscosity polyester resin. Thus, in order to achieve the physical properties desired in the present invention, it is very important to control the compositional ratios between the diol components.

Specifically, the compositional ratio of the second diol to the first diol (second diol (% by mole) / first diol (% by mole)) may be 2.50 to 10.00, 2.60 to 9.50, 2.70 to 9.00, 2.70 to 7.00, or 3.50 to 7.00. The compositional ratio of the third diol to the second diol (third diol (% by mole) / second diol (% by mole)) may be 2.70 to 11.50, 2.95 to 10.50, 3.20 to 10.00, 3.50 to 9.50, 3.50 to 7.00, or 3.50 to 5.00. The compositional ratio of the first diol to the third diol (first diol (% by mole) / third diol (% by mole)) may be 0.40 to 2.30, 0.45 to 2.25, 0.50 to 2.20, 0.50 to 2.00, 0.50 to 1.50, or 0.50 to 1.00. As the compositional ratios of the first to third diols satisfy the above respective ranges, it is possible to further enhance thermal resistance and hydrolysis resistance without deteriorating transparency and mechanical properties.

In addition, the dicarboxylic acid or its derivative component refers to a main monomer that constitutes the copolymerized polyester resin together with the diol component. The dicarboxylic acid or its derivative component may preferably comprise an aromatic dicarboxylic acid or its derivative in view of the enhancement of thermal resistance, but it is not limited thereto.

In the present specification, the "dicarboxylic acid or its derivative" refers to at least one compound selected from the group consisting of dicarboxylic acids and derivatives of dicarboxylic acids.

Specifically, the "derivative of a dicarboxylic acid" may refer to alkyl esters of a dicarboxylic acid or anhydrides of a dicarboxylic acid. For example, the alkyl ester may comprise an alkyl ester having 1 to 4 carbon atoms such as monomethyl ester, monoethyl ester, dimethyl ester, diethyl ester, and dibutyl ester, but it is not limited thereto.

More specifically, the dicarboxylic acid or its derivative may be terephthalic acid or its derivative, and it may be a compound that can react with a diol to form a terephthaloyl moiety, such as terephthalic acid, monoalkyl terephthalate, dialkyl terephthalate such as dimethyl terephthalate, or terephthalic anhydride.

According to an embodiment of the present invention, the dicarboxylic acid or its derivative may be terephthalic acid or its derivative.

Specifically, the dicarboxylic acid or its derivative may be comprised of terephthalic acid or its derivative alone. More specifically, the dicarboxylic acid or its derivative may be terephthalic acid or dimethyl terephthalate.

When the dicarboxylic acid is terephthalic acid, it may be preferable in that it is possible to increase the residual rate of ISB and to enhance mechanical properties such as impact strength and intrinsic viscosity characteristics. In addition, when the dicarboxylic acid derivative is dimethyl terephthalate, the residual rate of ISB may be slightly lower than the case where terephthalic acid is used, while it may be preferable in that it can further enhance such mechanical properties as impact strength and intrinsic viscosity characteristics.

For example, the copolymerized polyester resin may comprise 100% by mole of a residue derived from terephthalic acid or a residue derived from dimethyl terephthalate relative to the entire acid-derived residues of the copolymerized polyester resin.

According to another embodiment of the present invention, while the dicarboxylic acid or its derivative comprises terephthalic acid or its derivative, it may further comprise a dicarboxylic acid or its derivative different from terephthalic acid or its derivative.

Specifically, the dicarboxylic acid or its derivative may comprise terephthalic acid or its derivative, and it may further comprise at least one selected from the group consisting of aromatic dicarboxylic acids having 8 to 14 carbon atoms or derivatives thereof and aliphatic dicarboxylic acids having 4 to 12 carbon atoms or derivatives thereof.

The aromatic dicarboxylic acids having 8 to 14 carbon atoms or derivatives thereof may be, for example, at least one selected from the group consisting of isophthalic acid, dimethyl isophthalate, phthalic acid, dimethyl phthalate, phthalic anhydride, naphthalene dicarboxylic acids such as 2,6-naphthalene dicarboxylic acid, dialkyl naphthalene dicarboxylates such as dimethyl-2,6-naphthalene dicarboxylate, and diphenyl dicarboxylic acid, but they are not limited thereto.

The aliphatic dicarboxylic acids having 4 to 12 carbon atoms or derivatives thereof may comprise linear, branched, or cyclic aliphatic dicarboxylic acids or derivatives thereof. For example, they may be at least one selected from the group consisting of cyclohexane dicarboxylic acids such as 1,4-cyclohexane dicarboxylic acid and 1,3-cyclohexane dicarboxylic acid, cyclohexane dicarboxylates such as dimethyl-1,4-cyclohexane dicarboxylate and dimethyl-1,3-cyclohexane dicarboxylate, sebacic acid, succinic acid, isodecylsuccinic acid, maleic acid, maleic anhydride, fumaric acid, adipic acid, glutaric acid, and azelaic acid, but they are not limited thereto.

In addition, the dicarboxylic acid or its derivative may comprise terephthalic acid or its derivative in an amount of 90% by mole to 99% by mole and at least one selected from the group consisting of aromatic dicarboxylic acids having 8 to 14 carbon atoms or derivatives thereof, different therefrom, and aliphatic dicarboxylic acids having 4 to 12 carbon atoms or derivatives thereof in an amount of 1% by mole to 10% by mole.

For example, the copolymerized polyester resin may comprise a residue derived from terephthalic acid or a residue derived from dimethyl terephthalate in an amount of 90% by mole to 99% by mole, 92% by mole to 98% by mole, 93% by mole to 97% by mole, or 94% by mole to 96% by mole, and a residue derived from isophthalic acid in an amount of 1% by mole to 10% by mole, 2% by mole to 8% by mole, 3% by mole to 7% by mole, or 4% by mole to 6% by mole, relative to the entire acid-derived residues of the copolymerized polyester resin.

According to an embodiment of the present invention, a specimen having a thickness of 6 mm prepared from the copolymerized polyester resin has a haze of 30% or less when immersed in water at 85°C for 7 days.

Since materials such as packaging materials in direct contact with food or automobile interior parts exposed to high temperatures require high thermal resistance and hydrolysis resistance, it is important that such characteristics as transparency are not deteriorated even when they are exposed to moisture conditions at high temperatures.

Since a specimen having a thickness of 6 mm prepared from the copolymerized polyester resin according to an embodiment of the present invention has a haze of 30% or less when immersed in water at 85°C for 7 days, it has excellent hydrolysis resistance under moisture conditions at high temperatures. For example, when a specimen having a thickness of 6 mm prepared from the copolymerized polyester resin is immersed in water at 85°C for 7 days, it may have a haze of 30% or less, 29% or less, 28% or less, 13% to 30%, 15% to 28%, 15% to 23%, 16% to 22%, or 16% to 21%.

In addition, a specimen having a thickness of 6 mm prepared from the copolymerized polyester resin may have a haze of 3.0% or less before being immersed in the water. For example, before a specimen having a thickness of 6 mm prepared from the copolymerized polyester resin is immersed in the water, it may have a haze of 0.1% to 2.9%, 0.2% to 2.8%, 0.3% to 2.7%, 0.6% to 2.7%, 0.8% to 2.5%, 1.0% to 2.5%, or 1.0% to 2.3%.

A specimen having a thickness of 6 mm prepared from the copolymerized polyester resin may have an amount of change in haze of 27.0% or less before and after being immersed in water at 85°C for 7 days. For example, a specimen having a thickness of 6 mm prepared from the copolymerized polyester resin may have an amount of change in haze of 26.9% or less, 26.8% or less, 26.5% or less, 23.5% or less, 20.0% or less, 19.0% or less, 16.5% or less, or 15.0% or less, before and after being immersed in water at 85°C for 7 days. As the amount of change in haze satisfies the above range, it is possible to further enhance hydrolysis resistance.

The amount of change in haze (%) before and after the immersion may be calculated according to the following Equation A.

Amount of change in haze (%) = haze after immersion (%) - haze before immersion (%)          [Equation A]

In addition, the copolymerized polyester resin may have an intrinsic viscosity (IV) of 0.60 to 0.80 dl/g. For example, the copolymerized polyester resin may have an intrinsic viscosity (IV) of 0.62 dl/g to 0.79 dl/g, 0.63 dl/g to 0.78 dl/g, 0.64 dl/g to 0.78 dl/g, 0.65 dl/g to 0.76 dl/g, 0.64 dl/g to 0.72 dl/g, or 0.68 dl/g to 0.78 dl/g.

As the intrinsic viscosity satisfies the above range, it is possible to enhance mechanical properties such as impact strength. Specifically, even if the composition and contents of resins are the same, the mechanical properties, especially the impact strength characteristics, may vary depending on the intrinsic viscosity; thus, it is important to control the intrinsic viscosity along with the composition and contents of resins in order to enhance mechanical properties such as impact strength without deteriorating such properties as transparency and thermal resistance.

A specimen having a thickness of 6.4 mm prepared from the copolymerized polyester resin may have an impact strength of 700 J/m or more when measured according to ASTM D256. For example, a specimen having a thickness of 6.4 mm prepared from the copolymerized polyester resin may have an impact strength of 702 J/m or more, 710 J/m or more, 730 J/m or more, 735 J/m or more, 740 J/m or more, or 760 J/m or more, when measured according to ASTM D256.

Conventionally, research to enhance the thermal resistance and impact strength of copolymerized polyester resins has been continued; however, there is a limit to enhancing thermal resistance and hydrolysis resistance. Even if thermal resistance or hydrolysis resistance can be enhanced, there is a problem in that such properties as transparency and mechanical properties are deteriorated. Thus, it has been difficult to enhance such mechanical properties as thermal resistance, hydrolysis resistance, transparency, and impact strength altogether.

In particular, isosorbide has been widely used in that it can enhance thermal resistance by increasing the glass transition temperature, whereas it deteriorates such mechanical properties as transparency, color characteristics, and impact strength.

The copolymerized polyester resin is very excellent in impact resistance since a specimen having a thickness of 6.4 mm prepared therefrom has an impact strength of 700 J/m or more when measured according to ASTM D256. The impact strength changes sensitively with respect to the thickness of a specimen, especially as it gets thicker. The impact strength measured according to ASTM D256 for a specimen having a thickness of 3.2 mm prepared from conventional resins was usually 310 J/m or less. In contrast, the copolymerized polyester resin is very excellent in impact strength since a specimen prepared therefrom and having a larger thickness than those of the conventional resins satisfies an impact strength of 700 J/m or more. The copolymerized polyester resin according to an embodiment of the present invention has excellent impact resistance as the composition of the diol component is adjusted within a specific range, and such properties as intrinsic viscosity and glass transition temperature are controlled as well.

In addition, the copolymerized polyester resin may have a glass transition temperature (Tg) of 97°C to 120°C. For example, the glass transition temperature of the copolymerized polyester resin may be 97°C to 118°C, 99°C to 116°C, 99°C to 112°C, or 100°C to 110°C. If the glass transition temperature satisfies the above range, it is possible to enhance thermal resistance.

The copolymerized polyester resin may have a change in glass transition temperature (ΔTg) of 10°C or less according to the following Equation 1. For example, the change in glass transition temperature (ΔTg) according to the following Equation 1 may be 9°C or less, 8°C or less, 6°C or less, or 5°C or less.

[Equation 1]

$$\Delta Tg\ (°C) = Tg\ (°C)\ \text{before immersion} - Tg\ (°C)\ \text{after immersion}$$

In Equation 1, Tg (°C) before immersion is the first endothermic temperature in the second scan obtained using differential scanning calorimetry (DSC), and Tg (°C) after immersion is the first endothermic temperature measured in the first scan obtained using differential scanning calorimetry (DSC) after pellets prepared from the copolymerized polyester resin have been immersed in an airtight container containing water of 85°C for 4 days.

Here, the first scan was obtained by raising the temperature from 30°C to 280°C at 10°C/minute and maintaining the temperature at 280°C for 2 minutes. Thereafter, the second scan was obtained by lowering the temperature from 280°C to 30°C at - 300°C/minute, maintaining it for 15 minutes, and then raising the temperature again from 30°C to 280°C at 10°C/minute.

For example, the change in glass transition temperature (ΔTg) of the copolymerized polyester resin according to Equation 1 may be 9°C or less, 8°C or less, 6°C or less, or 5°C or less. As the change in glass transition temperature (ΔTg) under moisture conditions at high temperatures satisfies the above ranges, it is possible to enhance thermal resistance and hydrolysis resistance together.

The copolymerized polyester resin may have a glass transition temperature (Tg) of 89°C to 115°C after the immersion. For example, the glass transition temperature of the copolymerized polyester resin after the immersion may be 90°C to 114°C, 91°C to 112°C, 93°C to 109°C, 94°C to 105°C, or 95°C to 102°C. As the glass transition temperature after the immersion satisfies the above range, it is possible to enhance thermal resistance and hydrolysis resistance together.

The copolymerized polyester resin may have a glass transition temperature (Tg) of 97°C to 120°C, 97°C to 118°C, 99°C to 116°C, 99°C to 112°C, or 100°C to 110°C, before the immersion.

According to an embodiment of the present invention, the copolymerized polyester resin may further comprise at least one additive selected from the group consisting of a colorant, a crystallizing agent, an oxidation stabilizer, and a branching agent.

The colorant is an additive for enhancing the color characteristics of the copolymerized polyester resin. Commonly used colorants such as cobalt acetate and cobalt propionate may be used as the colorant as long as the effects of the present invention are not impaired.

Specifically, the colorant may be cobalt acetate, cobalt propionate, anthraquinonebased compounds, perinone-based compounds, azo-based compounds, and methinebased compounds. Commercially available toners such as Polysynthren Blue RLS of Clariant or Solvaperm Red BB of Clariant may be used.

In addition, the copolymerized polyester resin may comprise the colorant in an amount of 0.1 ppm to 30 ppm based on the total weight of the copolymerized polyester resin. For example, the colorant may be employed in an amount of 0.2 ppm to 30 ppm, 0.5 ppm to 25 ppm, 0.6 ppm to 23 ppm, or 0.8 ppm to 20 ppm, based on the total weight of the copolymerized polyester resin. As the content of the colorant satisfies the above range, the color characteristics of the copolymerized polyester resin may be sufficiently enhanced without deteriorating its mechanical properties.

The crystallizing agent may comprise at least one selected from the group consisting of a crystal nucleating agent, a UV absorber, a polyolefin resin, a polyamide resin, and a polyalkylene resin.

In addition, the copolymerized polyester resin may comprise the crystallizing agent in an amount of 0.1 ppm to 10 ppm based on the total weight of the copolymerized polyester resin. For example, the crystallizing agent may be employed in an amount of 0.2 ppm to 8 ppm, 0.5 ppm to 6 ppm, 1 ppm to 10 ppm, 2 ppm to 8 ppm, 3 ppm to 6 ppm, or 4 ppm to 6 ppm, based on the total weight of the copolymerized polyester resin. As the content of the crystallizing agent satisfies the above range, the thermal resistance and impact strength may be enhanced even if the residual rate of ISB is low.

The oxidation stabilizer may comprise at least one selected from the group consisting of hindered phenol-based oxidation stabilizers, phosphite-based oxidation stabilizers, and thioether-based oxidation stabilizers.

In addition, the copolymerized polyester resin may comprise the oxidation stabilizer in an amount of 50 ppm to 2,500 ppm based on the total weight of the copolymerized polyester resin. For example, the oxidation stabilizer may be employed in an amount of 50 ppm to 2,300 ppm, 60 ppm to 2,200 ppm, 80 ppm to 2,100 ppm, 100 ppm to 2,000 ppm, or 100 ppm to 1,500 ppm, based on the total weight of the copolymerized polyester resin. As the content of the oxidation stabilizer satisfies the above range, it is possible to effectively prevent a decrease in intrinsic viscosity that may occur in a subsequent process and to prevent a decrease in physical properties such as impact strength as well.

The branching agent may comprise at least one selected from the group consisting of trimellitic anhydride, trimethylol propane, and trimellitic acid.

In addition, the copolymerized polyester resin may comprise the branching agent in an amount of 100 ppm to 2,500 ppm based on the total weight of the copolymerized polyester resin. For example, the branching agent may be employed in an amount of 200 ppm to 2,500 ppm, 300 ppm to 2,300 ppm, 500 ppm to 2,300 ppm, 1,000 ppm to 2,500 ppm, 1,500 ppm to 2,300 ppm, or 1,800 ppm to 2,100 ppm, based on the total weight of the copolymerized polyester resin. As the content of the branching agent satisfies the above range, the intrinsic viscosity may be more effectively controlled within a specific range, so that such physical properties as impact strength may be enhanced as well.

Process for preparing a copolymerized polyester resin

The process for preparing a copolymerized polyester resin according to another embodiment of the present invention comprises (a) preparing a composition comprising a diol component and a dicarboxylic acid or its derivative component; (b) subjecting the composition to an esterification reaction; and (c) subjecting the product of the esterification reaction to a polycondensation reaction, wherein the molar ratio (G/A) of the diol component to the dicarboxylic acid or derivative component thereof introduced in step (a) is 1.10 to 3.00.

A copolymerized polyester resin prepared according to the process for preparing a copolymerized polyester resin has substantially the same composition and characteristics as those of the copolymerized polyester resin described above.

In addition, the composition and process conditions may be adjusted, so that the copolymerized polyester resin finally prepared according to the process for preparing a copolymerized polyester resin satisfies the properties such as transparency, thermal resistance, hydrolysis resistance, and mechanical properties described above.

First, a composition comprising a diol component and a dicarboxylic acid or its derivative component is prepared (step (a)).

Details on the diol component and dicarboxylic acid or its derivative component are as described above.

The molar ratio (G/A) of the diol component to the dicarboxylic acid or its derivative component introduced in step (a) is 1.10 to 3.00. For example, the molar ratio (G/A) of the diol component to the dicarboxylic acid or its derivative component introduced in step (a) may be 1.10 to 2.80, 1.12 to 2.65, 1.12 to 1.12 to 2.50, 1.10 to 2.15, 1.10 to 1.90, 1.12 to 1.50, 1.12 to 1.35, or 1.22 to 1.30. As the molar ratio (G/A) of the diol component to the dicarboxylic acid or its derivative component satisfies the above range, productivity may be enhanced without deterioration of transparency, and such mechanical properties as thermal resistance, hydrolysis resistance, and impact strength may be enhanced altogether.

In addition, the molar ratio (I/T) of the first diol component to the dicarboxylic acid or its derivative component introduced in step (a) may be 0.10 to 0.50, 0.13 to 0.50, 0.16 to 0.50, 1.10 to 0.45, 1.12 to 0.40, or 0.18 to 0.38.

The molar ratio (C/T) of the second diol component to the dicarboxylic acid or its derivative component introduced in step (a) may be 0.60 to 0.90, 0.63 to 0.85, 0.60 to 0.81, 0.65 to 0.75, or 0.70 to 0.75.

The molar ratio (E/T) of the third diol component to the dicarboxylic acid or its derivative component introduced in step (a) may be 0.05 to 1.50, 0.08 to 1.30, 0.10 to 1.00, 0.12 to 0.75, 0.12 to 0.50, 0.14 to 0.45, or 0.14 to 0.35.

In addition, at least one additive selected from the group consisting of a colorant, a crystallizing agent, an oxidation stabilizer, and a branching agent may be further added to the composition. Details on the additive are as described above.

Thereafter, the composition is subjected to an esterification reaction (step (b)).

The esterification reaction may be carried out at a pressure higher than normal pressure by 0.1 $kg/cm^2$ to 3.0 $kg/cm^2$ and a temperature of 245°C to 275°C for 2 to 12 hours.

The pressure may be higher than normal pressure by 0.1 $kg/cm^2$ to 3.0 $kg/cm^2$, 0.2 $kg/cm^2$ to 2.5 $kg/cm^2$, 0.3 $kg/cm^2$ to 2.2 $kg/cm^2$, 0.5 $kg/cm^2$ to 2.0 $kg/cm^2$, or 1.0 $kg/cm^2$ to 2.0 $kg/cm^2$.

In addition, the esterification reaction may be carried out at a temperature of 248°C to 275°C, 250°C to 275°C, 250°C to 272°C, 255°C to 270°C, or 260°C to 268°C, for 2 hours to 11 hours, 2 hours to 10 hours, 2.5 hours to 9 hours, 2.5 hours to 6 hours, or 2.5 hours to 4 hours.

More specifically, the esterification reaction may be carried out in the step of (b-1) injecting nitrogen into the reactor containing the composition to set a pressure higher than normal pressure by 0.1 $kg/cm^2$ to 3.0 $kg/cm^2$; (b-2) raising the temperature of the reactor from room temperature to 210°C to 230°C over 60 minutes to 120 minutes and then maintaining the state for 1 hour to 3 hours; and (b-3) raising the temperature to 245°C to 275°C over 1 hour to 3 hours and then subjecting the composition to an esterification reaction.

Step (b-2) may be a step of raising the temperature of the reactor from room temperature to 210°C to 230°C or 215°C to 225°C over 70 minutes to 110 minutes or 80 minutes to 100 minutes and then maintaining the state for 1 hour to 3 hours or 1.5 hours to 2.5 hours.

Upon completion of the esterification reaction, the pressure of the reactor in a pressurized state is lowered to normal pressure, and then the polycondensation reaction may be carried out.

Thereafter, the product of the esterification reaction is subjected to a polycondensation reaction(C).

The polycondensation reaction may be carried out at a pressure of 0.01 mmHg to 400 mmHg and a temperature of 260°C to 290°C for 1 hour to 10 hours. For example, the polycondensation reaction may be carried out at a pressure of 0.01 mmHg to 200 mmHg, 0.05 mmHg to 100 mmHg, 0.1 mmHg to 50 mmHg, 0.2 mmHg to 10 mmHg, 0.2 mmHg to 3 mmHg, 0.3 mmHg to 1.5 mmHg, or 0.5 mmHg to 1.2 mmHg, and a temperature of 263°C to 290°C, 265°C to 285°C, 268°C to 285°C, 270°C to 285°C, or 275°C to 285°C, for 1 hour to 8 hours or 2 hours to 6 hours.

Specifically, the polycondensation reaction may be carried out in the step of (c-1) reducing the pressure of the product of the esterification reaction to 4.0 mmHg to 6.0 mmHg over 20 to 40 minutes, and (c-2) raising the temperature to 260°C to 290°C over 0.5 hour to 2 hours and then carrying out a polycondensation reaction while maintaining a pressure of 0.01 mmHg to 400 mmHg.

Step (c-1) may be a step of reducing the pressure of the product of the esterification reaction to 4.0 mmHg to 6.0 mmHg or 4.5 mmHg to 5.5 mmHg over 20 to 40 minutes or 25 to 35 minutes.

In addition, in step (c-2), the temperature may be raised to 263°C to 290°C, 265°C to 285°C, 268°C to 285°C, 270°C to 285°C, or 275°C to 285°C, over 0.5 hour to 2 hours or 0.7 hour to 1.2 hours.

At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly.

The polycondensation reaction may be carried out until the intrinsic viscosity (IV) of the polycondensation reactants becomes 0.62 dl/g to 0.79 dl/g, 0.63 dl/g to 0.78 dl/g, 0.64 dl/g to 0.78 dl/g, 0.65 dl/g to 0.76 dl/g, 0.64 dl/g to 0.72 dl/g, or 0.68 dl/g to 0.78 dl/g.

In addition, a catalyst and/or a stabilizer may be further added in the esterification reaction and the polycondensation reaction.

For example, the catalyst for an esterification reaction may be methylates of sodium and magnesium; acetates, borates, fatty acid salts, and carbonates of Zn, Cd, Mn, Co, Ca, and Ba; metallic Mg; and oxides of Pb, Zn, Sb, and Ge.

In addition, the catalyst for polycondensation reaction may be, for example, titaniumbased catalysts such as tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetyl acetonate titanate, ethyl acetoacetic ester titanate, isostearyl titanate, titanium dioxide, titanium dioxide/silicon dioxide copolymers, titanium dioxide/zirconium dioxide copolymers; germanium-based catalysts such as germanium dioxide and copolymers using the same; or tin-based catalysts such as monobutyltin oxide, dibutyltinoxide, and monobutylhydroxytinoxide.

In addition, the stabilizer may be a phosphorus-based compound such as phosphoric acid, trimethyl phosphate, and triethyl phosphate may be used, but it is not limited thereto.

The stabilizer may be employed in an amount of 10 ppm to 2,500 ppm based on the total weight of the copolymerized polyester resin. For example, the stabilizer may be employed in an amount of 150 ppm to 2,300 ppm, 200 ppm to 2,000 ppm, 300 ppm to 1,500 ppm, 50 ppm to 400 ppm, 70 ppm to 350 ppm, or 100 ppm to 300 ppm, based on the total weight of the copolymerized polyester resin.

The residual rate (%) of isosorbide (ISB) in the copolymerized polyester resin prepared by the process for preparing a copolymerized polyester resin according to an embodiment of the present invention may be 25% or more. For example, the residual rate (%) of isosorbide (ISB) in the copolymerized polyester resin may be calculated according to the following Equation B and may be 25% or more, 30% or more, 32% or more, 45% or more, 50% or more, or 53% or more.

Residual rate of ISB (%) = (% by mole of ISB-derived residue among 100% by mole of entire residues of the diol component of the copolymerized polyester resin / molar ratio of ISB to dicarboxylic acid or its derivative component added during the preparation of the copolymerized polyester resin) × 100      [Equation B]

The residual rate of isosorbide stands for the content of isosorbide contained in the final copolymerized polyester resin prepared by the polycondensation process relative to the content of isosorbide introduced. As the residual rate of isosorbide in the copolymerized polyester resin prepared by the process for preparing a copolymerized polyester resin according to an embodiment of the present invention is controlled within the above range, the thermal resistance and hydrolysis resistance can be further enhanced without deteriorating transparency and mechanical properties.

## Embodiments for Carrying Out the Invention

Hereinafter, the present invention will be described in more detail with reference to the following examples. However, these examples are set forth to illustrate the present invention, and the scope of the present invention is not limited thereto.

## [Example]

## Preparation of a copolymerized polyester resin

## Example 1

(a) Preparation of a composition

A 10-liter reactor equipped with a column and a condenser for cooling with water was charged with 2,408.6 g (14.5 moles) of terephthalic acid (TPA), 381.3 g (2.61 moles) of isosorbide (ISB), 1,567.0 g (10.9 moles) of cyclohexanedimethanol (CHDM), and 287.9 g (4.6 moles) of ethylene glycol (EG). Here, G/A (total diol/total diacid; molar ratio of the diol component to the dicarboxylic acid or its derivative component) was 1.25.

Thereafter, 2.5 g of $GeO_2$ as a catalyst, 5.0 g of phosphoric acid as a stabilizer, 0.3 g of cobalt acetate as a colorant, 0.023 g of a blue toner (product name: Polysynthren Blue RLS, manufacturer: Clariant), 0.004 g of a red toner (product name: Solvaperm Red BB, manufacturer: Clariant), and 0.38 g of a hindered phenolic oxidation stabilizer (product name: Irganox 1076, manufacturer: BASF) were added thereto, followed by stirring to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 260°C over 2 hours. Thereafter, an esterification reaction was carried out at a temperature of 260°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 275°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactants or the temperature of the reactants rose above the set temperature, the stirring speed was appropriately adjusted accordingly. The polycondensation reaction was carried out until the intrinsic viscosity (IV) of the mixture (melt) in the reactor reached 0.72 dl/g. The mixture was then discharged to the outside of the reactor to form strands, which were solidified with a cooling liquid and then granulated to have an average weight of about 12 mg to 14 mg to prepare a copolymerized polyester resin.

In the copolymerized polyester resin thus prepared, the terephthalic acid-derived residue was 100% by mole relative to the entire acid-derived residues, and the isosorbide-derived residue was 10% by mole, the cyclohexanedimethanol-derived residue was 75% by mole, and the ethylene glycol-derived residue was 15% by mole, relative to the entire diol-derived residues.

**Example 2**

(a) Preparation of a composition

A 10-liter reactor equipped with a column and a condenser for cooling with water was charged with 2,438.8 g (14.7 moles) of terephthalic acid (TPA), 772.2 g (5.29 moles) of isosorbide (ISB), 1,375.1 g (9.5 moles) of cyclohexanedimethanol (CHDM), and 154.8 g (2.5 moles) of ethylene glycol (EG). Here, G/A (total diol/total diacid; molar ratio of the diol component to the dicarboxylic acid or its derivative component) was 1.18.

Thereafter, 2.5 g of GeO$_2$ as a catalyst, 5.0 g of phosphoric acid as a stabilizer, 0.2 g of cobalt acetate as a colorant, 0.031 g of a blue toner (product name: Polysynthren Blue RLS, manufacturer: Clariant), and 0.007 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 270°C over 2 hours. Thereafter, an esterification reaction was carried out at a temperature of 270°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Example 1, except that the temperature of the reactor was raised to 280°C and that the polycondensation reaction was carried out until the intrinsic viscosity (IV) of the mixture (melt) reached 0.66 dl/g.

In the copolymerized polyester resin thus prepared, the terephthalic acid-derived residue was 100% by mole relative to the entire acid-derived residues, and the isosorbide-derived residue was 24% by mole, the cyclohexanedimethanol-derived residue was 65% by mole, and the ethylene glycol-derived residue was 11% by mole, relative to the entire diol-derived residues.

**Example 3**

(a) Preparation of a composition

A 10-liter reactor equipped with a column and a condenser for cooling with water was charged with 2,621.2 g (15.8 moles) of terephthalic acid (TPA), 368.9 g (2.53 moles) of isosorbide (ISB), 1,841.8 g (12.8 moles) of cyclohexanedimethanol (CHDM), and 176.2 g (2.8 moles) of ethylene glycol (EG). Here, G/A (total diol/total diacid; molar ratio of the diol component to the dicarboxylic acid or its derivative component) was 1.15.

Thereafter, 2.5 g of $GeO_2$ as a catalyst, 5.0 g of phosphoric acid as a stabilizer, 0.021 g of a blue toner (product name: Polysynthren Blue RLS, manufacturer: Clariant), and 0.003 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 0.5 kgf/cm$^2$ (absolute pressure: 1,127.8 mmHg). Then, the temperature of the reactor was raised from room temperature to 220°C over 90 minutes and maintained at 220°C for 2 hours, and the temperature was then raised again to 264°C over 2 hours. Thereafter, an esterification reaction was carried out at a temperature of 264°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Example 1, except that the temperature of the reactor was raised to 278°C over 1 hour, that the pressure in the reactor was kept at 0.9 Torr (absolute pressure: 0.9 mmHg) or lower, and that the polycondensation reaction was carried out until the intrinsic viscosity (IV) of the mixture (melt) reached 0.76 dl/g.

In the copolymerized polyester resin thus prepared, the terephthalic acid-derived residue was 100% by mole relative to the entire acid-derived residues, and the isosorbide-derived residue was 9% by mole, the cyclohexanedimethanol-derived residue was 81% by mole, and the ethylene glycol-derived residue was 10% by mole, relative to the entire diol-derived residues.

**Example 4**

(a) Preparation of a composition

A 10-liter reactor equipped with a column and a condenser for cooling with water was charged with 3,219.6 g (19.4 moles) of terephthalic acid (TPA), 566.3 g (3.88 moles) of isosorbide (ISB), 1,955.0 g (13.6 moles) of cyclohexanedimethanol (CHDM), and 481.0 g (7.7 moles) of ethylene glycol (EG). Here, G/A (total diol/total diacid; molar ratio of the diol component to the dicarboxylic acid or its derivative component) was 1.30.

Thereafter, 2.5 g of $GeO_2$ as a catalyst, 5.0 g of phosphoric acid as a stabilizer, 0.1 g of cobalt acetate as a colorant, 0.028 g of a blue toner (product name: Polysynthren Blue RLS, manufacturer: Clariant), 0.005 g of a red toner (product name: Solvaperm Red BB, manufacturer: Clariant), and 10 g of trimellitic anhydride as a branching agent were added thereto, followed by stirring to prepare a composition.

(b) Esterification reaction

Subsequently, nitrogen was injected into the reactor containing the composition to make the pressure in the reactor higher than normal pressure by 2.0 kgf/cm$^2$ (absolute pressure: 2,231.2 mmHg). Then, the temperature of the reactor was raised from room temperature to 220°C over 90 minutes and maintained at 220°C for 2 hours, and the temperature was then raised again to 262°C over 2 hours. Thereafter, an esterification reaction was carried out at a temperature of 262°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Example 1, except that the temperature of the reactor was raised to 282°C over 1 hour, that the pressure in the reactor was kept at 0.6 Torr (absolute pressure: 0.6 mmHg) or lower, and that the polycondensation reaction was carried out until the intrinsic viscosity (IV) of the mixture (melt) reached 0.78 dl/g.

In the copolymerized polyester resin thus prepared, the terephthalic acid-derived residue was 100% by mole relative to the entire acid-derived residues, and the isosorbide-derived residue was 10% by mole, the cyclohexanedimethanol-derived residue was 70% by mole, and the ethylene glycol-derived residue was 20% by mole, relative to the entire diol-derived residues.

**Example 5**

(a) Preparation of a composition

A 10-liter reactor equipped with a column and a condenser for cooling with water was charged with 2,806.2 g (16.9 moles) of terephthalic acid (TPA), 937.9 g (6.42 moles) of isosorbide (ISB), 1,704.0 g (11.8 moles) of cyclohexanedimethanol (CHDM), and 146.7 g (2.4 moles) of ethylene glycol (EG). Here, G/A (total diol/total diacid; molar ratio of the diol component to the dicarboxylic acid or its derivative component) was 1.22.

Thereafter, 2.5 g of $GeO_2$ as a catalyst, 5.0 g of phosphoric acid as a stabilizer, 0.2 g of cobalt acetate as a colorant, 0.034 g of a blue toner (product name: Polysynthren Blue RLS, manufacturer: Clariant), 0.005 g of a red toner (product name: Solvaperm Red BB, manufacturer: Clariant), and 4.5 g of a hindered phenolic oxidation stabilizer (product name: Irganox 1076, manufacturer: BASF) were added thereto, followed by stirring to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 268°C over 2 hours. Thereafter, an esterification reaction was carried out at a temperature of 268°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Example 1, except that the temperature of the reactor was raised to 285°C over 1 hour, that the pressure in the reactor was kept at 0.5 Torr (absolute pressure: 0.5 mmHg) or lower, and that the polycondensation reaction was carried out until the intrinsic viscosity (IV) of the mixture (melt) reached 0.68 dl/g.

In the copolymerized polyester resin thus prepared, the terephthalic acid-derived residue was 100% by mole relative to the entire acid-derived residues, and the isosorbide-derived residue was 20% by mole, the cyclohexanedimethanol-derived residue was 70% by mole, and the ethylene glycol-derived residue was 10% by mole, relative to the entire diol-derived residues.

**Example 6**

(a) Preparation of a composition

A 10-liter reactor equipped with a column and a condenser for cooling with water was charged with 2,407.8 g (14.5 moles) of terephthalic acid (TPA), 126.7 g (0.8 mole) isophthalic acid (IPA), 557.3 g (3.82 moles) of isosorbide (ISB), 1,561.0 g (10.8 moles) of cyclohexanedimethanol (CHDM), and 151.5 g (2.4 moles) of ethylene glycol (EG). Here, G/A (total diol/total diacid; molar ratio of the diol component to the dicarboxylic acid or its derivative component) was 1.12.

Thereafter, 2.5 g of $GeO_2$ as a catalyst, 5.0 g of phosphoric acid as a stabilizer, and 0.2 g of cobalt acetate as a colorant were added thereto, followed by stirring to prepare a composition.

(b) Esterification reaction

Subsequently, nitrogen was injected into the reactor containing the composition to make the pressure in the reactor higher than normal pressure by 1.5 kgf/cm$^2$ (absolute pressure: 1,863.4 mmHg). Then, the temperature of the reactor was raised from room temperature to 220°C over 90 minutes and maintained at 220°C for 2 hours, and the temperature was then raised again to 272°C over 2 hours. Thereafter, an esterification reaction was carried out at a temperature of 272°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Example 1, except that the temperature of the reactor was raised to 268°C over 1 hour, that the pressure in the reactor was kept at 1.1 Torr (absolute pressure: 1.1 mmHg) or lower, and that the polycondensation reaction was carried out until the intrinsic viscosity (IV) of the mixture (melt) reached 0.65 dl/g.
In the copolymerized polyester resin thus prepared, the terephthalic acid-derived residue was 95% by mole and the isophthalic acid-derived residue was 5% by mole relative to the entire acid-derived residues, and the isosorbide-derived residue was 14% by mole, the cyclohexanedimethanol-derived residue was 71% by mole, and the ethylene glycol-derived residue was 15% by mole, relative to the entire diol-derived residues.

**Example 7**

(a) Preparation of a composition

A 10-liter reactor equipped with a column and a condenser for cooling with water was charged with 2,173.6 g (11.2 moles) of dimethyl terephthalate (DMT), 817.9 g (5.60 moles) of isosorbide (ISB), 1,371.4 g (9.5 moles) of cyclohexanedimethanol (CHDM), and 798.8 g (12.9 moles) of ethylene glycol (EG). Here, G/A (total diol/total diacid; molar ratio of the diol component to the dicarboxylic acid or its derivative component) was 2.50.
Thereafter, 2.5 g of $GeO_2$ as a catalyst, 5.0 g of phosphoric acid as a stabilizer, 0.009 g of a blue toner (product name: Polysynthren Blue RLS, manufacturer: Clariant), 0.003 g of a red toner (product name: Solvaperm Red BB, manufacturer: Clariant), and 0.015 g of polyethylene resin as a crystallizing agent were added thereto, followed by stirring to prepare a composition.

(b) Esterification reaction

Subsequently, nitrogen was injected into the reactor containing the composition to make the pressure in the reactor higher than normal pressure by 1.5 kgf/cm$^2$ (absolute pressure: 1,863.4 mmHg). Then, the temperature of the reactor was raised from room temperature to 220°C over 90 minutes and maintained at 220°C for 2 hours, and the temperature was then raised again to 250°C over 2 hours. Thereafter, an esterification reaction was carried out at a temperature of 250°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Example 1, except that the temperature of the reactor was raised to 270°C over 1 hour, that the pressure in the reactor was kept at 0.3 Torr (absolute pressure: 0.3 mmHg) or lower, and that the polycondensation reaction was carried out until the intrinsic viscosity (IV) of the mixture (melt) reached 0.64 dl/g.
In the copolymerized polyester resin thus prepared, the dimethyl terephthalatederived residue was 100% by mole relative to the entire acid-derived residues, and the isosorbide-derived residue was 16% by mole, the cyclohexanedimethanol-derived residue was 76% by mole, and the ethylene glycol-derived residue was 8% by mole, relative to the entire diol-derived residues.

**Comparative Example 1**

(a) Preparation of a composition

A 10-liter reactor equipped with a column and a condenser for cooling with water was charged with 2,453.7 g (14.8 moles) of terephthalic acid (TPA), 690.6 g (4.7 moles) of isosorbide (ISB), 1,341.0 g (9.3 moles) of cyclohexanedimethanol (CHDM), and 320.8 g (5.2 moles) of ethylene glycol (EG). Here, G/A (total diol/total diacid; molar ratio of the diol component to the dicarboxylic acid or its derivative component) was 1.30.

Thereafter, 2.0 g of $GeO_2$ as a catalyst, 5.0 g of phosphoric acid as a stabilizer, 0.2 g of cobalt acetate as a colorant, 0.017 g of a blue toner (product name: Polysynthren Blue RLS, manufacturer: Clariant), and 0.006 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 269°C over 2 hours. Thereafter, an esterification reaction was carried out at a temperature of 269°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 276°C over 1 hour, and a polycondensation reaction was carried out while the pressure of the reactor was maintained at 1.1 Torr (absolute pressure: 1.1 mmHg) or less. Here, the stirring speed was set high at the beginning of the polycondensation reaction. As the polycondensation reaction proceeded, when the stirring power was weakened due to the increase in the viscosity of the reactants or the temperature of the reactants rose above the set temperature, the stirring speed was appropriately adjusted accordingly. The polycondensation reaction was carried out until the intrinsic viscosity (IV) of the mixture (melt) in the reactor reached 0.62 dl/g. The mixture was then discharged to the outside of the reactor to form strands, which were solidified with a cooling liquid and then granulated to have an average weight of about 12 mg to 14 mg to prepare a copolymerized polyester resin.

In the copolymerized polyester resin thus prepared, the terephthalic acid-derived residue was 100% by mole relative to the entire acid-derived residues, and the isosorbide-derived residue was 20% by mole, the cyclohexanedimethanol-derived residue was 63% by mole, and the ethylene glycol-derived residue was 17% by mole, relative to the entire diol-derived residues.

**Comparative Example 2**

(a) Preparation of a composition

A 10-liter reactor equipped with a column and a condenser for cooling with water was charged with 2,547.6 g (15.3 moles) of terephthalic acid (TPA), 448.1 g (3.1 moles) of isosorbide (ISB), 1,834.2 g (12.7 moles) of cyclohexanedimethanol (CHDM), and 209.3 g (3.4 moles) of ethylene glycol (EG). Here, G/A (total diol/total diacid; molar ratio of the diol component to the dicarboxylic acid or its derivative component) was 1.25.

Thereafter, 2.0 g of $GeO_2$ as a catalyst, 5.0 g of phosphoric acid as a stabilizer, 0.3 g of cobalt acetate as a colorant, 0.025 g of a blue toner (product name: Polysynthren Blue RLS, manufacturer: Clariant), and 0.008 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 262°C over 2 hours. Thereafter, an esterification reaction was carried out at a temperature of 262°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Comparative Example 1, except that the temperature of the reactor was raised to 266°C over 1 hour, that the pressure in the reactor was kept at 0.8 Torr (absolute pressure: 0.8 mmHg) or lower, and that the polycondensation reaction was carried out until the intrinsic viscosity (IV) of the mixture (melt) reached 0.81 dl/g.

In the copolymerized polyester resin thus prepared, the terephthalic acid-derived residue was 100% by mole relative to the entire acid-derived residues, and the isosorbide-derived residue was 10% by mole, the cyclohexanedimethanol-derived residue was 83% by mole, and the ethylene glycol-derived residue was 7% by mole, relative to the entire diol-derived residues.

**Comparative Example 3**

(a) Preparation of a composition

A 10-liter reactor equipped with a column and a condenser for cooling with water was charged with 2,516.7 g (15.2 moles) of terephthalic acid (TPA), 996.1 g (6.8 moles) of isosorbide (ISB), 1,353.5 g (9.4 moles) of cyclohexanedimethanol (CHDM), and 141.0 g (2.3 moles) of ethylene glycol (EG). Here, G/A (total diol/total diacid; molar ratio of the diol component to the dicarboxylic acid or its derivative component) was 1.22.

Thereafter, 2.0 g of GeO$_2$ as a catalyst, 5.0 g of phosphoric acid as a stabilizer, 0.1 g of cobalt acetate as a colorant, 0.048 g of a blue toner (product name: Polysynthren Blue RLS, manufacturer: Clariant), and 0.008 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 0.5 kgf/cm$^2$ (absolute pressure: 1,127.8 mmHg). Then, the temperature of the reactor was raised from room temperature to 220°C over 90 minutes and maintained at 220°C for 2 hours, and the temperature was then raised again to 272°C over 2 hours. Thereafter, an esterification reaction was carried out at a temperature of 272°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Comparative Example 1, except that the temperature of the reactor was raised to 284°C over 1 hour, that the pressure in the reactor was kept at 1.0 Torr (absolute pressure: 1.0 mmHg) or lower, and that the polycondensation reaction was carried out until the intrinsic viscosity (IV) of the mixture (melt) reached 0.63 dl/g.

In the copolymerized polyester resin thus prepared, the terephthalic acid-derived residue was 100% by mole relative to the entire acid-derived residues, and the isosorbide-derived residue was 25% by mole, the cyclohexanedimethanol-derived residue was 62% by mole, and the ethylene glycol-derived residue was 13% by mole, relative to the entire diol-derived residues.

**Comparative Example 4**

(a) Preparation of a composition

A 10-liter reactor equipped with a column and a condenser for cooling with water was charged with 2,041.6 g (12.3 moles) of terephthalic acid (TPA), 215.5 g (1.5 moles) of isosorbide (ISB), 1,328.2 g (9.2 moles) of cyclohexanedimethanol (CHDM), and 160.1 g (2.6 moles) of ethylene glycol (EG). Here, G/A (total diol/total diacid; molar ratio of the diol component to the dicarboxylic acid or its derivative component) was 1.08.

Thereafter, 2.0 g of $GeO_2$ as a catalyst, 5.0 g of phosphoric acid as a stabilizer, 0.1 g of cobalt acetate as a colorant, 0.010 g of a blue toner (product name: Polysynthren Blue RLS, manufacturer: Clariant), and 0.003 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 1.5 kgf/cm$^2$ (absolute pressure: 1,863.4 mmHg). Then, the temperature of the reactor was raised from room temperature to 220°C over 90 minutes and maintained at 220°C for 2 hours, and the temperature was then raised again to 264°C over 2 hours. Thereafter, an esterification reaction was carried out at a temperature of 264°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Comparative Example 1, except that the temperature of the reactor was raised to 270°C over 1 hour, that the pressure in the reactor was kept at 1.0 Torr (absolute pressure: 1.0 mmHg) or lower, and that the polycondensation reaction was carried out until the intrinsic viscosity (IV) of the mixture (melt) reached 0.82 dl/g.

In the copolymerized polyester resin thus prepared, the terephthalic acid-derived residue was 100% by mole relative to the entire acid-derived residues, and the isosorbide-derived residue was 7% by mole, the cyclohexanedimethanol-derived residue was 75% by mole, and the ethylene glycol-derived residue was 18% by mole, relative to the entire diol-derived residues.

**Comparative Example 5**

(a) Preparation of a composition

A 10-liter reactor equipped with a column and a condenser for cooling with water was charged with 2,555.0 g (15.4 moles) of terephthalic acid (TPA), 1,213.5 g (8.3 moles) of isosorbide (ISB), 1,595.8 g (11.1 moles) of cyclohexanedimethanol (CHDM), and 38.2 g (0.6 moles) of ethylene glycol (EG). Here, G/A (total diol/total diacid; molar ratio of the diol component to the dicarboxylic acid or its derivative component) was 1.30.

Thereafter, 2.0 g of $GeO_2$ as a catalyst, 5.0 g of phosphoric acid as a stabilizer, 0.6 g of cobalt acetate as a colorant, 0.008 g of a blue toner (product name: Polysynthren Blue RLS, manufacturer: Clariant), and 0.001 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 2.0 kgf/cm$^2$ (absolute pressure: 2,231.2 mmHg). Then, the temperature of the reactor was raised from room temperature to 220°C over 90 minutes and maintained at 220°C for 2 hours, and the temperature was then raised again to 270°C over 2 hours. Thereafter, an esterification reaction was carried out at a temperature of 270°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Comparative Example 1, except that the temperature of the reactor was raised to 282°C over 1 hour, that the pressure in the reactor was kept at 0.7 Torr (absolute pressure: 0.7 mmHg) or lower, and that the polycondensation reaction was carried out until the intrinsic viscosity (IV) of the mixture (melt) reached 0.59 dl/g.

In the copolymerized polyester resin thus prepared, the terephthalic acid-derived residue was 100% by mole relative to the entire acid-derived residues, and the isosorbide-derived residue was 26% by mole, the cyclohexanedimethanol-derived residue was 72% by mole, and the ethylene glycol-derived residue was 2% by mole, relative to the entire diol-derived residues.

**Comparative Example 6**

(a) Preparation of a composition

A 10-liter reactor equipped with a column and a condenser for cooling with water was charged with 2,638.1 g (15.9 moles) of terephthalic acid (TPA), 162.4 g (1.1 moles) of isosorbide (ISB), 1,371.1 g (9.5 moles) of cyclohexanedimethanol (CHDM), and 404.0 g (6.5 moles) of ethylene glycol (EG). Here, G/A (total diol/total diacid; molar ratio of the diol component to the dicarboxylic acid or its derivative component) was 1.08.

Thereafter, 2.0 g of $GeO_2$ as a catalyst, 5.0 g of phosphoric acid as a stabilizer, 0.1 g of cobalt acetate as a colorant, 0.012 g of a blue toner (product name: Polysynthren Blue RLS, manufacturer: Clariant), and 0.003 g of a red toner (product name: Solvaperm Red BB, manufacturer: Clariant) were added thereto, followed by stirring to prepare a composition.

(b) Esterification reaction

Subsequently, nitrogen was injected into the reactor containing the composition to make the pressure in the reactor higher than normal pressure by 1.5 kgf/cm$^2$ (absolute pressure: 1,863.4 mmHg). Then, the temperature of the reactor was raised from room temperature to 220°C over 90 minutes and maintained at 220°C for 2 hours, and the temperature was then raised again to 258°C over 2 hours. Thereafter, an esterification reaction was carried out at a temperature of 258°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

A copolymerized polyester resin was prepared in the same manner as in step (c) of Comparative Example 1, except that the temperature of the reactor was raised to 266°C over 1 hour, that the pressure in the reactor was kept at 0.6 Torr (absolute pressure: 0.6 mmHg) or lower, and that the polycondensation reaction was carried out until the intrinsic viscosity (IV) of the mixture (melt) reached 0.79 dl/g.

In the copolymerized polyester resin thus prepared, the terephthalic acid-derived residue was 100% by mole relative to the entire acid-derived residues, and the isosorbide-derived residue was 5% by mole, the cyclohexanedimethanol-derived residue was 60% by mole, and the ethylene glycol-derived residue was 35% by mole, relative to the entire diol-derived residues.

**Comparative Example 7**

(a) Preparation of a composition

A 10-liter reactor equipped with a column and a condenser for cooling with water was charged with 2,913.9 g (17.6 moles) of terephthalic acid (TPA), 1,127.6 g (7.7 moles) of isosorbide (ISB), 1,466.1 g (10.2 moles) of cyclohexanedimethanol (CHDM), and 522.4 g (8.4 moles) of ethylene glycol (EG). Here, G/A (total diol/total diacid; molar ratio of the diol component to the dicarboxylic acid or its derivative component) was 1.50.

Thereafter, 2.0 g of $GeO_2$ as a catalyst, 5.0 g of phosphoric acid as a stabilizer, 0.1 g of cobalt acetate as a colorant, 0.018 g of a blue toner (product name: Polysynthren Blue RLS, manufacturer: Clariant), and 0.004 g of a red toner (product name: Solvaperm Red BB, manufacturer: Clariant) were added thereto, followed by stirring to prepare a composition.

(b) Esterification reaction

An esterification reaction was carried out in the same manner as in step (b) of Comparative Example 6.

(c) Polycondensation reaction (PA)

A copolymerized polyester resin was prepared in the same manner as in step (c) of Comparative Example 1, except that the temperature of the reactor was raised to 270°C over 1 hour, that the pressure in the reactor was kept at 0.9 Torr (absolute pressure: 0.9 mmHg) or lower, and that the polycondensation reaction was carried out until the intrinsic viscosity (IV) of the mixture (melt) reached 0.57 dl/g.

In the copolymerized polyester resin thus prepared, the terephthalic acid-derived residue was 100% by mole relative to the entire acid-derived residues, and the isosorbide-derived residue was 20% by mole, the cyclohexanedimethanol-derived residue was 58% by mole, and the ethylene glycol-derived residue was 22% by mole, relative to the entire diol-derived residues.

**[Test Example]**

**Test Example 1: Composition of the copolymerized polyester resin**

The copolymerized polyester resins of Examples 1 to 7 and Comparative Examples 1 to 7 were each dissolved in a CDCl$_3$ solvent at a concentration of 3 mg/ml. The composition (% by mole) of the copolymerized polyester resin was then measured through a 1H-NMR spectrum obtained using a nuclear magnetic resonance instrument (JEOL, 600 MHz FT-NMR) at 25°C.

In addition, the compositional ratio of cyclohexanedimethanol to isosorbide (C (% by mole)/I (% by mole)), the compositional ratio of cyclohexanedimethanol to ethylene glycol (C (% by mole)/E (% by mole)), and the compositional ratio of isosorbide to ethylene glycol (I (% by mole)/E (% by mole)) were calculated from the composition (% by mole) of each diol component identified above.

**Test Example 2: Residual rate of ISB**

The copolymerized polyester resins of Examples 1 to 7 and Comparative Examples 1 to 7 were each calculated for the residual rate (%) of ISB according to the following Equation B.

Residual rate of ISB (%) = (% by mole of ISB-derived residue among 100% by mole of entire residues of the diol component of the copolymerized polyester resin / molar ratio of ISB to dicarboxylic acid or its derivative component added during the preparation of the copolymerized polyester resin) × 100      [Equation B]

**Test Example 3: Haze**

The copolymerized polyester resins of Examples 1 to 7 and Comparative Examples 1 to 7 were each made into a specimen having a thickness of 6 mm. The haze (%) of the specimen was measured using NDK's Hazemeter NDH7000 before and after being immersed in an airtight container filled with water at 85°C for 7 days. In such an event, the airtight container was placed inside a hot air oven to maintain a temperature of 85°C.

In addition, the amount of change in haze (%) before and after the immersion was calculated according to the following Equation A.

Amount of change in haze (%) = haze after immersion (%) - haze before immersion (%)      [Equation A]

**Test Example 4: Glass transition temperature**

The copolymerized polyester resins of Examples 1 to 7 and Comparative Examples 1 to 7 were each made into pellets. The glass transition temperature (TG) of the pellets was measured before and after being immersed in water.

Specifically, Tg (°C) before immersion was measured as the first endothermic temperature in the second scan obtained using differential scanning calorimetry (DSC). Tg (°C) after immersion was measured as the first endothermic temperature measured in the first scan obtained using differential scanning calorimetry (DSC) after the pellets had been immersed in an airtight container containing water of 85°C for 4 days.

In such an event, the airtight container was placed inside a hot air oven to maintain a temperature of 85°C. The first scan was obtained by raising the temperature from 30°C to 280°C at 10°C/minute and maintaining the temperature at 280°C for 2 minutes. Thereafter, the second scan was obtained by lowering the temperature from 280°C to 30°C at - 300°C/minute, maintaining it for 15 minutes, and then raising the temperature again from 30°C to 280°C at 10°C/minute.

In addition, the change in glass transition temperature (ΔTg) was calculated according to the following Equation 1.

[Equation 1]

$$\Delta Tg \, (^{\circ}C) = Tg \, (^{\circ}C) \text{ before immersion} - Tg \, (^{\circ}C) \text{ after immersion}$$

**Test Example 5: Impact strength**

The copolymerized polyester resins of Examples 1 to 7 and Comparative Examples 1 to 7 were each measured for the impact strength (J/m) according to ASTM D256.

Specifically, the copolymerized polyester resin was injection-molded at 250°C to prepare a specimen (width: 63.3 mm, length: 12.5 mm, thickness: 6.4 mm), and a notch of 2.3 mm was formed in the central part of the specimen using a notchmeter according to ISO 2818.

Thereafter, one end of the specimen was fixed, and the other end was impacted with a hammer in the notched direction to measure the impact strength using an impact strength instrument (Product name: NO. 258 PC-S IMPACT TESTER, manufacturer: YASUDA SEIKI SEISAKUSHO, hammer capacity: 5.5 J). Here, it was measured ten times, and the average value was calculated.

**Test Example 6: Intrinsic viscosity**

The copolymerized polyester resins of Examples 1 to 7 and Comparative Examples 1 to 7 were each dissolved in ortho-chlorophenol (OCP) at 150°C at a concentration of 0.12%, and the intrinsic viscosity (IV, dl/g) was measured with an Ubbelohde viscometer in a thermostat at 35°C.

[Table 1]

|  | Ex. 1 | Ex. 2 | Ex. 3 | Ex. 4 | Ex. 5 | Ex. 6 | Ex. 7 |
|---|---|---|---|---|---|---|---|
| C (% by mole)/ I (% by mole) | 7.50 | 2.71 | 9.00 | 7.00 | 3.50 | 5.07 | 4.75 |
| C (% by mole)/ E (% by mole) | 5.00 | 5.91 | 8.10 | 3.50 | 7.00 | 4.73 | 9.50 |
| I (% by mole)/ E (% by mole) | 0.67 | 2.18 | 0.90 | 0.50 | 2.00 | 0.93 | 2.00 |
| Residual rate of ISB (%) | 56 | 67 | 56 | 50 | 53 | 56 | 32 |
| Haze after immersion (%) | 15.9 | 28.1 | 17.8 | 15.3 | 22.2 | 20.6 | 21.5 |
| Haze before immersion (%) | 1.2 | 1.8 | 1.5 | 1.1 | 2.3 | 2.5 | 2.7 |
| Amount of change in haze (%) | 14.7 | 26.3 | 16.3 | 14.2 | 19.9 | 18.1 | 18.8 |
| Tg before immersion (°C) | 100 | 112 | 99 | 100 | 110 | 105 | 107 |
| Tg after immersion (°C) | 95 | 103 | 95 | 95 | 102 | 99 | 100 |
| ΔTg (°C) | 5 | 9 | 4 | 5 | 8 | 6 | 7 |
| Impact strength (J/m) | 780 | 710 | 702 | 740 | 735 | 760 | 770 |
| IV (dl/g) | 0.72 | 0.66 | 0.76 | 0.78 | 0.68 | 0.65 | 0.64 |

[Table 2]

|  | C. Ex. 1 | C. Ex. 2 | C. Ex. 3 | C. Ex. 4 | C. Ex. 5 | C. Ex. 6 | C. Ex. 7 |
|---|---|---|---|---|---|---|---|
| C (% by mole)/ I (% by mole) | 3.15 | 8.30 | 2.48 | 10.71 | 2.77 | 12.00 | 2.90 |
| C (% by mole)/ E (% by mole) | 3.71 | 11.86 | 4.77 | 4.17 | 36.00 | 1.71 | 2.64 |

(continued)

| | C. Ex. 1 | C. Ex. 2 | C. Ex. 3 | C. Ex. 4 | C. Ex. 5 | C. Ex. 6 | C. Ex. 7 |
|---|---|---|---|---|---|---|---|
| I (% by mole)/ E (% by mole) | 1.18 | 1.43 | 1.92 | 0.39 | 13.00 | 0.14 | 0.91 |
| Residual rate of ISB (%) | 63 | 50 | 56 | 58 | 48 | 71 | 45 |
| Haze after immersion (%) | 20.6 | 31.5 | 35.4 | 12.1 | 38.4 | 9.1 | 22.7 |
| Haze before immersion (%) | 1.9 | 1.6 | 1.9 | 0.8 | 0.5 | 0.4 | 1.5 |
| Amount of change in haze (%) | 18.7 | 29.9 | 33.5 | 11.3 | 37.9 | 8.7 | 21.2 |
| Tg before immersion (°C) | 110 | 100 | 116 | 96 | 117 | 92 | 107 |
| Tg after immersion (°C) | 101 | 95 | 103 | 93 | 100 | 88 | 99 |
| ΔTg (°C) | 9 | 5 | 13 | 3 | 17 | 4 | 8 |
| Impact strength (J/m) | 680 | 200 | 620 | 810 | 670 | 500 | 350 |
| IV (dl/g) | 0.62 | 0.81 | 0.63 | 0.82 | 0.59 | 0.79 | 0.57 |

As shown in Tables 1 and 2 above, the copolymerized polyester resins of Examples 1 to 7 were excellent in all of the residual rate of ISB, decrease in Tg, haze after being immersed in water at 85°C for 7 days, amount of change in haze before and after immersion, impact strength, and intrinsic viscosity as compared with the resins of Comparative Examples 1 to 7.

Specifically, in the copolymerized polyester resins of Examples 1 to 7, the content and molar ratio of the diol components, particularly isosorbide and cyclohexanedimethanol, were controlled within specific ranges, whereby the residual rate of ISB was high while the crystallinity and thermal resistance were not deteriorated, the haze value was improved even under moisture conditions at high temperatures, and both impact strength and intrinsic viscosity were excellent. Accordingly, when the copolymerized polyester resins of Examples 1 to 7 are applied to products that require high thermal resistance, hydrolysis resistance, and mechanical properties, such as packaging materials such as food containers and automobile interior parts, they would be excellent in stability and quality.

In contrast, the resins of Comparative Examples 1 to 7 had a low residual rate of ISB, resulting in a decrease in crystallinity or thermal resistance or very low impact strength. In particular, the resins of Comparative Examples 1 to 7 had a very high haze value under moisture conditions at high temperatures. Thus, when they are applied to products that require high thermal resistance, hydrolysis resistance, and mechanical properties, such as packaging materials such as food containers and automobile interior parts, they would be poor in stability and quality.

**Claims**

1. A copolymerized polyester resin, which comprises a repeat unit derived from a diol component and a repeat unit derived from a dicarboxylic acid or its derivative component,

   wherein the diol component comprises:

      (1) 9% by mole to 24% by mole of a first diol comprising isosorbide (ISB) or a derivative thereof;
      (2) 65% by mole to 81% by mole of a second diol comprising cyclohexanedimethanol (CHDM) or a derivative thereof; and
      (3) 8% by mole to 20% by mole of a third diol different from the first diol and the second diol, and

   a specimen having a thickness of 6 mm prepared from the copolymerized polyester resin has a haze of 30% or less when immersed in water at 85°C for 7 days.

2. The copolymerized polyester resin of claim 1, wherein the copolymerized polyester resin has an intrinsic viscosity (IV) of 0.60 to 0.80 dl/g.

3. The copolymerized polyester resin of claim 1, wherein a specimen having a thickness of 6.4 mm prepared from the copolymerized polyester resin has an impact strength of 700 J/m or more when measured according to ASTM D256.

4. The copolymerized polyester resin of claim 1, wherein a specimen having a thickness of 6.0 mm prepared from the copolymerized polyester resin has an amount of change in haze of 27.0% or less when immersed in water at 85°C for 7 days.

5. The copolymerized polyester resin of claim 1, which has a change in glass transition temperature (ΔTg) according to the following Equation 1 of 10°C or less:

[Equation 1]

$$\Delta Tg \, (°C) = Tg \, (°C) \text{ before immersion} - Tg \, (°C) \text{ after immersion}$$

in Equation 1, Tg (°C) before immersion is the first endothermic temperature in the second scan obtained using differential scanning calorimetry (DSC), and

Tg (°C) after immersion is the first endothermic temperature measured in the first scan obtained using differential scanning calorimetry (DSC) after pellets prepared from the copolymerized polyester resin have been immersed in an airtight container containing water of 85°C for 4 days,

wherein the first scan is obtained by raising the temperature from 30°C to 280°C at 10°C/minute and maintaining the temperature at 280°C for 2 minutes, and the second scan is obtained by lowering the temperature from 280°C to 30°C at -300°C/minute, maintaining it for 15 minutes, and then raising the temperature again from 30°C to 280°C at 10°C/minute.

6. The copolymerized polyester resin of claim 5, which has a glass transition temperature (Tg) of 89°C to 115°C after the immersion.

7. The copolymerized polyester resin of claim 1, wherein the third diol is at least one selected from the group consisting of ethylene glycol, diethylene glycol, triethylene glycol, 1,2-propanediol, 1,3-propanediol, 1,4-propanediol, 1,5-pentanediol, 1,6-hexanediol, 1,8-octanediol, 2-methyl-1,3-propanediol, 2,2,4-trimethyl-1,3-pentanediol, 2-ethyl-2-butyl-1,3-propanediol, neopentyl glycol, and derivatives thereof.

8. The copolymerized polyester resin of claim 1, wherein the copolymerized polyester resin further comprises at least one additive selected from the group consisting of a colorant, a crystallizing agent, an oxidation stabilizer, and a branching agent.

9. The copolymerized polyester resin of claim 8, wherein the crystallizing agent comprises at least one selected from the group consisting of a crystal nucleating agent, a UV absorber, a polyolefin resin, a polyamide resin, and a polyalkylene resin, and

the crystallizing agent is employed in an amount of 0.1 ppm to 10 ppm based on the total weight of the copolymerized polyester resin.

10. The copolymerized polyester resin of claim 8, wherein the oxidation stabilizer comprises at least one selected from the group consisting of hindered phenol-based oxidation stabilizers, phosphite-based oxidation stabilizers, and thioether-based oxidation stabilizers, and

the oxidation stabilizer is employed in an amount of 50 ppm to 2,500 ppm based on the total weight of the copolymerized polyester resin.

11. The copolymerized polyester resin of claim 8, wherein the branching agent comprises at least one selected from the group consisting of trimellitic anhydride, trimethylol propane, and trimellitic acid, and

the branching agent is employed in an amount of 100 ppm to 2,500 ppm based on the total weight of the copolymerized polyester resin.

12. A process for preparing the copolymerized polyester resin of claim 1, which comprises:

(a) preparing a composition comprising a diol component and a dicarboxylic acid or its derivative component;
(b) subjecting the composition to an esterification reaction; and
(c) subjecting the product of the esterification reaction to a polycondensation reaction,
wherein the molar ratio (G/A) of the diol component to the dicarboxylic acid or derivative component thereof introduced in step (a) is 1.10 to 3.00.

<table>
<tr><td colspan="2">**INTERNATIONAL SEARCH REPORT**</td><td colspan="2">International application No.<br>**PCT/KR2022/020503**</td></tr>
</table>

**A.    CLASSIFICATION OF SUBJECT MATTER**

**C08G 63/672**(2006.01)i; **C08G 63/199**(2006.01)i; **C08G 63/78**(2006.01)i; **C08K 5/00**(2006.01)i

According to International Patent Classification (IPC) or to both national classification and IPC

**B.    FIELDS SEARCHED**

Minimum documentation searched (classification system followed by classification symbols)

C08G 63/672(2006.01); B29C 43/24(2006.01); C08G 63/137(2006.01); C08G 63/16(2006.01); C08G 63/183(2006.01); C08G 63/199(2006.01); C08G 63/66(2006.01); C08G 63/78(2006.01); C08G 63/80(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 아이소소바이드(isosorbide), 사이클로헥산디메탄올 (cyclohexanedimethanol), 에틸렌글리콜(ethylene glycol), 몰비(molar ratio)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2020-0098065 A (SK CHEMICALS CO., LTD.) 20 August 2020 (2020-08-20)<br>    See claims 1-4 and 8; paragraphs [0067] and [0077]; and example 1. | 1-12 |
| A | KR 10-2014-0009117 A (TORAY INDUSTRIES, INC.) 22 January 2014 (2014-01-22)<br>    See entire document. | 1-12 |
| A | KR 10-2020-0109793 A (SKC CO., LTD.) 23 September 2020 (2020-09-23)<br>    See entire document. | 1-12 |
| A | KR 10-2019-0063669 A (LOTTE CHEMICAL CORPORATION) 10 June 2019 (2019-06-10)<br>    See entire document. | 1-12 |
| A | KR 10-2017-0037588 A (SK CHEMICALS CO., LTD.) 03 April 2017 (2017-04-03)<br>    See entire document. | 1-12 |

☐ Further documents are listed in the continuation of Box C.      ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **20 March 2023** | **21 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2022/020503**

| Patent document cited in search report | | | Publication date (day/month/year) | Patent family member(s) | | | Publication date (day/month/year) |
|---|---|---|---|---|---|---|---|
| KR | 10-2020-0098065 | A | 20 August 2020 | CN | 113286843 | A | 20 August 2021 |
| | | | | EP | 3925999 | A1 | 22 December 2021 |
| | | | | EP | 3925999 | A4 | 17 August 2022 |
| | | | | JP | 2022-521678 | A | 12 April 2022 |
| | | | | US | 2022-0127417 | A1 | 28 April 2022 |
| | | | | WO | 2020-166805 | A1 | 20 August 2020 |
| KR | 10-2014-0009117 | A | 22 January 2014 | CN | 103189415 | A | 03 July 2013 |
| | | | | CN | 103189415 | B | 15 April 2015 |
| | | | | EP | 2615123 | A1 | 17 July 2013 |
| | | | | EP | 2615123 | B1 | 17 July 2019 |
| | | | | EP | 2615123 | B9 | 13 November 2019 |
| | | | | JP | 5790506 | B2 | 07 October 2015 |
| | | | | MY | 165613 | A | 18 April 2018 |
| | | | | TW | 201217428 | A | 01 May 2012 |
| | | | | TW | I523886 | B | 01 March 2016 |
| | | | | US | 2013-0253165 | A1 | 26 September 2013 |
| | | | | US | 9273182 | B2 | 01 March 2016 |
| | | | | WO | 2012-032876 | A1 | 15 March 2012 |
| KR | 10-2020-0109793 | A | 23 September 2020 | KR | 10-2201257 | B1 | 11 January 2021 |
| KR | 10-2019-0063669 | A | 10 June 2019 | KR | 10-2221425 | B1 | 26 February 2021 |
| KR | 10-2017-0037588 | A | 03 April 2017 | | None | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190064304